Europäisches Patentamt

European Patent Office

Office européen des brevets

(11) Veröffentlichungsnummer: **0 303 779**
**A1**

# EUROPÄISCHE PATENTANMELDUNG

(21) Anmeldenummer: **88108600.3**

(22) Anmeldetag: **30.05.88**

(51) Int. Cl.4: **G09B 9/00**

(30) Priorität: **13.08.87 DE 3726959**

(43) Veröffentlichungstag der Anmeldung:
**22.02.89 Patentblatt 89/08**

(84) Benannte Vertragsstaaten:
**DE FR GB IT**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Güldenpfennig, Peter, Dipl.-Ing.**
**Zugspitzstrasse 7**
**D-8025 Unterhaching(DE)**

(54) **Bildprozessorgesteuertes Simulatorsystem.**

(57) Die Erfindung betrifft ein bildprozessorgesteuertes Simulatorsystem zur Darstellung eines Fernsehbildes in einem simulierten Fernglas, wobei sichergestellt ist, daß eine optische Zuordnung zur Simulation der Außenwelt erfolgt und zwar zur Richtung, in der das Fernglas ausgerichtet wird. Durch die vorgeschlagenen Maßnahmen wird es ermöglicht, daß nur ein Bildgenerator für zwei Display-Systeme trotz unterschiedlicher Vergrößerungsfaktoren benutzt werden muß. Ein Ausführungsbeispiel ist erläutert und in einer Figur dargestellt.

EP 0 303 779 A1

## Bildprozessorgesteuertes Simulatorsystem

Die Erfindung bezieht sich auf ein bildprozessorgesteuertes Simulatorsystem zur Wiedergabe von Geländebildern unter wahlweiser Verwendung von bezüglich ihres Bildwinkels unterschiedlichen Einrichtungen gemäß dem Gattungsbegriff des Anspruchs 1.

Verfahren und Anordnungen zur Gewinnung und Wiedergabe von Geländebildern für Sichtsimulatoren sind beispielsweise einmal aus der DE-PS 30 35 213 und zum andermal aus der DE-PS 21 28 061 der Anmelderin bekannt geworden. Die Konzeption der erstgenannten Druckschrift ist vorzugsweise für einen Flugsimulator zur Flugausbildung und zum Schießtraining von Flugzeugführern geeignet und die letztgenannte Druckschrift offenbart eine Einrichtung zum Üben des Schießens mit Lenkwaffen.

Bei der Ausbildung von Panzerbesatzungen liegen jedoch andere Bedingungen und Verhältnisse vor. Hier wird in den Simulatorn von folgendem taktischen Verhalten ausgegangen:
- Aufklärung des Gefechtsfeldes durch den Kommandanten, meistens bei halbgeöffneter Turmluke mittels des Fernglases,
- Erkennen eines Zieles durch den Kommandanten,
- Identifizierung des Zieles durch den Kommandanten mittels des Turm- oder Geschützvisiers bei geschlossener Luke,
- Ziel zur Bekämpfung auswählen, wobei dies durch das Visier erfolgt,
- Ziel dem Richtschützen zuweisen und dessen Bekämpfungsdurchführung.

Hieraus geht hervor, daß dem Kommandanten bei der Simulation drei unterschiedliche Sichtdarstellungen vermittelt werden müssen, nämlich:
- eine Darstellung der Außenwelt mit relativ großem Blickwinkel horizontal, die mit bloßem Auge betrachtet werden kann,
eine Darstellung der Außenwalt, die durch das Fernglas betrachtet werden kann,
- eine Darstellung der Außenwelt, die über das Visier betrachtet wird.

Es ist bekannt, das Problem des Umschaltens von der Kollimatoroptik auf das Visier dadurch durchzuführen, daß mittels eines Annäherungssensors der Bildgenerator automatisch von der Kollimatoroptik der halbgeöffneten Luke auf das Visier umgeschaltet wird, wenn der Kommandant sich diesem nähert. Dabei findet in Echtzeit auch eine entsprechende Umschaltung des Blickwinkels statt.

Der vorliegenden Erfindung liegt nun die Aufgabe zugrunde, das Problem, daß der Kommandant eine Aufklärung mit bloßem Auge wahrnimmt und dann zur Besseren Erkennung des Zieles das Fernglas benutzt und ihm dabei natürlich ein korreliertes Bild im Fernglas dargestellt werden muß, zu lösen.

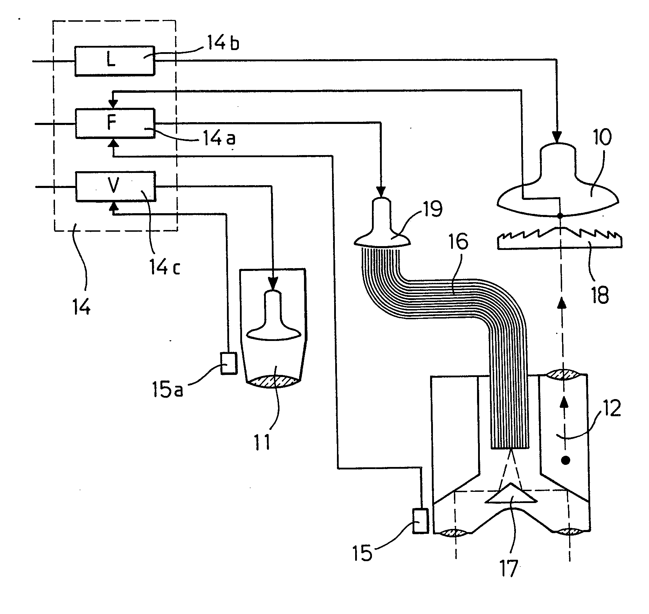

Diese Aufgabe wird durch die im Anspruch 1 aufgezeigten Maßnahmen gelöst. Weiterbildungen und Ausgestaltungen sind in den Unteransprüchen angegeben und in der nachfolgenden Beschreibung ist ein Ausführungsbeispiel erläutert, das in der einzigen Figur der Zeichnung grafisch dargestellt ist.

Es wird also einem bildprozessorgesteuertem Simulatorsystem mit einer ersten Einrichtung 10 zur Darstellung der Außenwelt, wie sie mit dem bloßen Auge gesehen wird und einer zweiten Einrichtung 11 zur Darstellung der Außenwelt, wie sie sich durch ein Visier zeigt, eine dritte Einrichtung 12 zugeordnet, die die Außenwelt darstellt, wie sie durch ein Fernrohr aufgenommen wird. Alle drei Darstellungsarten erfolgen von einem Bildgenerator bzw. einem Rechner 14, wie aus der Figur der Zeichnung ersichtlich ist. Das heißt, der Bildgenerator oder Rechner 14 liefert die jeweils entsprechenden Bildinformationen dem jeweils zum aktuellen Zeitpunkt benutzten Display-System 14a, 14b, 14c. Also einmal der Kollimatoroptik 10, 18 für die Aufklärung mit dem bloßen Auge, zum andernmal dem Fernglas 12 bei Aufklärung mit diesem Gerät und zum drittenmal dem Visier 11 bei der Identifizierung beziehungsweise Zielausrichtung durch den Kommandanten.

Das Display-System 14a des Fernglases 12 zur Darstellung eines vom Bildgenerator oder Rechners 14 gelieferten Bildes besteht aus einem 1-Zoll-Monitor 19, der über ein Glasfaserbündel 16 mit dem optischen System 17 eines simulierten Fernglases 12 verbunden ist. Außerdem ist dieses Fernglas 12 mit einem Annäherungssensor 15 versehen. In dem Moment, in dem der Kommandant beziehungsweise der Auszubildende das Fernglas 12 an die Augen hält, wird auotmatisch eine Umschaltung der Bildinformation von der Kollimatoroptik 18 auf das Fernglas 12 vorgenommen. Dabei wird gleichzeitig der Blickwinkel des vom Image-Prozessors gelieferten Bildes entsprechend verändert. Auf dem Display-System 14b der halbgeöffneten Luke - wie vorstehend schon erläutert - wird kein Bild mehr dargestellt, jedoch bleibt dieses System 14b aktiviert und mittels eines nach dem Prinzip interaktiver Lichtgriffel arbeitender IR-Sensor wird nun die Blickrichtung festgestellt, mit der der Kommandant bzw. Auszubildende mit dem Fernglas 12 die Umwelt betrachtet. Dadurch ist sichergestellt, daß dem Kommandanten in Echtzeit das entsprechende Bild vom Image-Prozessor in das optische System des simulierten Fernglases 12 geliefert wird. In dem Moment, in dem der Kommandant das Fernglas absetzt, erfolgt die sofortige Umschaltung der Bildinformation zurück auf die Kollimatoroptik der halbgeöffneten Luke.

Durch eine solche Konzeption ist nun eine realistische Ausbildung am Simulator gewährleistet. Bekanntlich ist eine direkte Betrachtung der Kollimatoroptik bei halbgeöffneter Luke durch das Fernglas 12 wegen der Vergrößerungseigenschaften dieses optischen Gerätes nicht möglich, da die Darstellung des vom Image-Prozessors 14a, 14b, 14c gelieferten Bildes über ein Fernsehraster erfolgt und bei direkter Betrachtung mit einem Fernglas deutlich die Fernsehziele hervortreten würden, wodurch ein absolut unrealistisches Bild mit viel zu schlechter Auflösung entstände.

## Ansprüche

1. Bildprozessorgesteuertes Simulatorsystem zur Wiedergabe von Geländebildern unter wahlweiser Verwendung von bezüglich ihres Bildwinkels unterschiedlichen Einrichtungen und einem bilderzeugenden Rechner bzw. Generator, wobei die eine Einrichtung eine Darstellung der Außenwelt vermittelt wie sie mit dem bloßen Auge gesehen wird und eine zweite Einrichtung eine Darstellung der Außenwelt vermittelt wie sie mit dem Visier aufgenommen wird, **dadurch gekennzeichnet,** daß den beiden Einrichtungen (10, 11) eine dritte Einrichtung (12) zugeordnet wird, die eine Darstellung der Außenwelt vermittelt, wie sie sich durch die Sicht durch ein Fernglas ergibt, wobei das vom Rechner (14) in passenden Ausschnitten generierte Bild auf einem 1-Zoll-Monitor dargestellt wird und der jeweilige Ausschnitt, der auf einem Display-System (14a) einen Lichtpunkt erzeugt, über ein entsprechend konzipiertes Glasfaserkabel (16) übertragen und durch einen optischen Sender (17) in der dritten Einrichtung (12) bestimmt wird.

2. Simulatorsystem nach Anspruch 1, **dadurch gekennzeichnet,** daß der als "simuliertes Fernglas" zu bezeichnenden Einrichtung ein Annäherungssensor (15) zugeordnet ist.

3. Simulatorsystem nach Anspruch 1 oder 2, **dadurch gekennzeichnet,** daß die Aktivierung der dritten Einrichtung (12) der Rechner (14) automatisch eine Umschaltung der Bildinformation von der Kollimatoroptik (18) der Einrichtung (10) auf die "Fernglasoptik" der Einrichtung (12) durchführt und der Image-Prozessor dem Display-System (14a) den entsprechend geänderten Blickwinkel einstellt.

4. Simulatorsystem nach den Ansprüchen 1 bis 3, **dadurch gekennzeichnet,** daß das Display-System (14b) der Einrichtung (10) auch bei Aktivierung der Einrichtung (12) ohne Bilddarstellung aktiviert bleibt und mittels eines zugeordneten IR-Sensors (19) die Blickrichtung der Einrichtung (12) feststellt.

5. Simulatorsystem nach den Ansprüchen 1 bis 4, **dadurch gekennzeichnet,** daß der IR-Sensor (19) der Einrichtung (10) entsprechend dem Prinzip eines interaktiven Lichtgriffels ausgebildet ist.

10 315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 322 726 (A. COLLIER) * Spalte 4, Zeilen 30-62; Spalte 5, Zeilen 17-65; Figuren * | 1 | G 09 B 9/00 |
| A | | 2,3 | |
| A | GB-A-2 117 609 (HONEYWELL GmbH) --- | | |
| A | GB-A-2 115 946 (REDIFON SIMULATION LTD) ----- | | |

**RECHERCHIERTE SACHGEBIETE (Int. Cl.4)**

G 09 B

Der vorliegende Recherchenbericht wurde für alle Patentansprüche erstellt

| Recherchenort | Abschlußdatum der Recherche | Prüfer |
|---|---|---|
| DEN HAAG | 25-10-1988 | ODGERS M.L. |